(19) Europäisches Patentamt
European Patent Office
Office européen des brevets

(11) EP 3 882 844 A1

(12) EUROPEAN PATENT APPLICATION

(43) Date of publication:
22.09.2021 Bulletin 2021/38

(51) Int Cl.:
G06Q 40/06 (2012.01)

(21) Application number: 20195022.7

(22) Date of filing: 08.09.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 19.03.2020 JP 2020049963

(71) Applicants:
• KABUSHIKI KAISHA TOSHIBA
Minato-ku
Tokyo
105-0023 (JP)
• Toshiba Energy Systems & Solutions
Corporation
Saiwai-ku
Kawasaki-shi
Kanagawa 2120013 (JP)

(72) Inventors:
• Aisu, Hideyuki
Tokyo, 105-0023 (JP)
• Shiga, Yoshiaki
Tokyo, 105-0023 (JP)
• Shin, Hiromasa
Tokyo, 105-0023 (JP)
• Yoshida, Takufumi
Tokyo, 105-0023 (JP)
• Kimura, Kotaro
Kanagawa, 212-0013 (JP)

(74) Representative: Hoffmann Eitle
Patent- und Rechtsanwälte PartmbB
Arabellastraße 30
81925 München (DE)

(54) INFORMATION PROCESSING APPARATUS, INFORMATION PROCESSING METHOD, AND PROGRAM

(57) An information processing apparatus includes a similar instance data extraction part that extracts similar instance data from past transaction result data, a profit calculation part that calculates a profit on an assumption that a bid is made in a first-class market with temporarily determined bid contents, and an indicator calculation part that calculates an indicator indicating a degree of risk and return based on the profit calculated and the similar instance data.

FIG. 1

**Description**

<u>FIELD</u>

Examples of the present invention relate to an information processing apparatus, an information processing method, and a recording medium.

<u>BACKGROUND</u>

A method for formulating a commodity portfolio for financial products trading is known. In this method, a risk/return indicator such as an expected value of profit, Value at Risk (VaR), or Conditional Value at Risk (CVaR) is calculated from price result data on each product in a past fixed period or by Monte Carlo simulation. With reference to the indicator thus calculated, a holding ratio of each product can be determined based on an investment strategy.

It is conceivable that this method will be applied to transactions (purchases and sales) in products to be traded other than financial products such as electricity. However, unless an estimated holding period of each product is sufficiently long, this method cannot exhibit a sufficient effect. In principle, the products to be traded such as electricity cannot be stored and are suitable only for short-term transactions; therefore, the above-described method that is applied on the assumption that products to be traded will be held for a long term cannot exhibit an effect. Accordingly, it is required that transactions in a trading market where the products to be traded are traded be supported.

<u>BRIEF DESCRIPTION OF THE DRAWINGS</u>

FIG. 1 is a block diagram of an information processing apparatus corresponding to an information processing apparatus according to a first example;
FIG. 2 is a diagram for describing a flow of sale of electricity in a first-class market (regulation market);
FIG. 3 is a diagram for describing a blind single-price auction system;
FIG. 4 is a diagram showing, in a table format, an example of instance data stored in an instance data storage;
FIG. 5 is a diagram showing an example of similar instance data extracted by a similar instance data extraction part;
FIG. 6 is a diagram showing an example of instance data extracted in descending order of similarity score;
FIG. 7 is a diagram for describing a method for calculating an activation volume from result data of a similar date in the first-class market.
FIG. 8 is a diagram showing an example where a pseudo-probability distribution of profit is created;
FIG. 9 is a diagram showing an example where similar instance data is identified, the similar instance data being used in calculation of an indicator;
FIG. 10A is a diagram showing an example where no trade-off occurs;
FIG. 10B is a diagram showing an example where a trade-off occurs;
FIG. 11 is a flowchart of an example of an operation of the information processing apparatus according to the present example;
FIG. 12 is a block diagram of an information processing apparatus corresponding to an information processing apparatus according to a second example;
FIG. 13 is a block diagram of an information processing apparatus corresponding to an information processing apparatus according to a third example;
FIG. 14 is a diagram showing an example of data containing result values of meteorological quantities acquired by a meteorological data acquisition part; and
FIG. 15 is a diagram showing a hardware structure of the apparatus shown in FIG. 1, FIG. 12, or FIG. 13.

<u>DETAILED DESCRIPTION</u>

According to one example, an information processing apparatus includes a similar instance data extraction part that extracts similar instance data from past transaction result data, a profit calculation part that calculates a profit on an assumption that a bid is made in a first-class market with temporarily determined bid contents, and an indicator calculation part that calculates an indicator indicating a degree of risk and return based on the profit calculated and the similar instance data.

Hereinafter, examples of the present invention will be described with reference to the drawings. In the following description, electricity traded in an electricity trading market will be given as a product to be traded, but the product to be traded is not particularly limited to electricity. For example, when water or gas is to be traded, the product to be traded may be water or gas.

(First example)

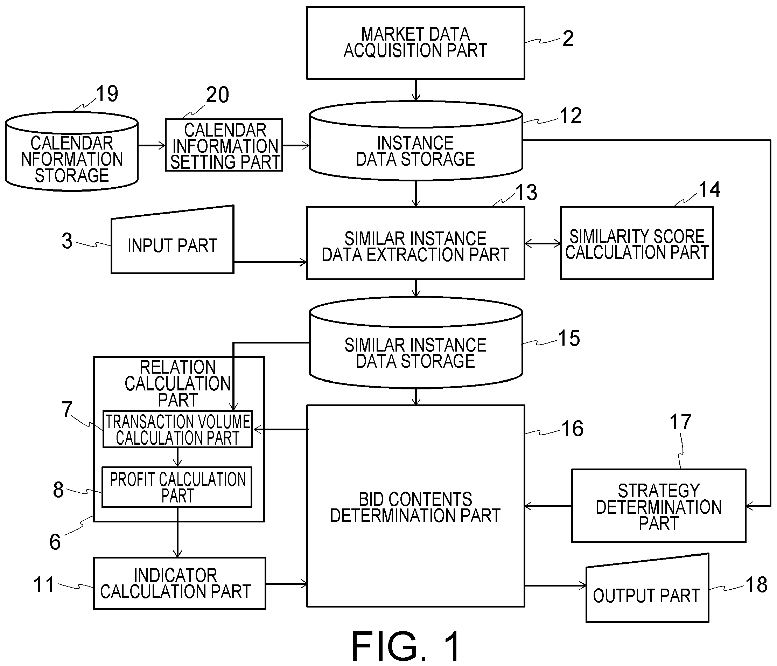

FIG. 1 shows a block diagram of an information processing apparatus 10 according to a first example. The information processing apparatus 10 shown in FIG. 1 primarily supports transactions in electricity. Therefore, the information processing apparatus 10 in FIG. 1 can be referred to as a transaction support apparatus. The information processing apparatus 10 shown in FIG. 1 (hereinafter, the apparatus) includes a market data acquisition part 2, an instance data storage 12, a calendar information setting part 20, a calendar information storage 19, a similar instance data extraction part 13, a similarity score calculation part (similarity calculation part) 14, a similar instance data storage 15, a bid contents determination part (first determination part) 16, a strategy determination part (second determination part) 17, an indicator calculation part 11, a relation calculation part 6, a transaction volume calculation part 7, a profit calculation part 8, an input part 3, and an output part 18. The apparatus is connected to an electricity trading market system (not shown) over a communication network. The communication network is a wired network, a wireless network, or a hybrid of the wired network and the wireless network. The communication network is, for example, a local area network or a wide area network.

The input part 3 receives an input operation such as various instructions or data from a user of the apparatus. The user is an operator or administrator of the apparatus. Examples of the data input by the user include conditions such as a parameter required for processing executed by the apparatus. Examples of the instructions input by the user include an instruction for manipulation relating to data visualization. The input part 3 is implemented by, for example, a mouse, a keyboard, a touch screen, a trackball, a joystick, a graphics tablet, a voice recognition device, an image recognition device, or a combination of such devices. The input part 3 may be an information terminal such as a personal computer, a tablet, a smartphone, or a feature phone. Although only one input part 3 is shown in FIG. 1, a plurality of input parts 3 may be provided.

The output part 18 is a device that outputs the data thus input. The output part 18 is, for example, a display device capable of displaying the data. Under this condition, the output part 18 may be, for example, a liquid crystal display, an organic electroluminescence display, a light emitting diode (LED) display, a cathode ray tube (CRT) display, or a projector, or alternatively, may be any other type of device. The output part 18 may be a printer for printing the data on paper or a transmitter that transmits the data by radio or wire. In the following description, suppose the output part 18 is a display device.

The input part 3 and the output part 18 may be integrated into a single entity such as a personal computer, a tablet, or a smartphone. Further, either or both input part 3 and the output part 18 may be integrated with the apparatus.

The electricity trading market system exists as an external system for the apparatus. The electricity trading market system holds electricity transaction result data (transaction result data). The result data contains a result value representing a past transaction and time information, the result value and the time information being associated with each other. Examples of the result value include, for example, a market price (electricity transaction price) of electricity traded in an electricity exchange or an activation volume to be described later.

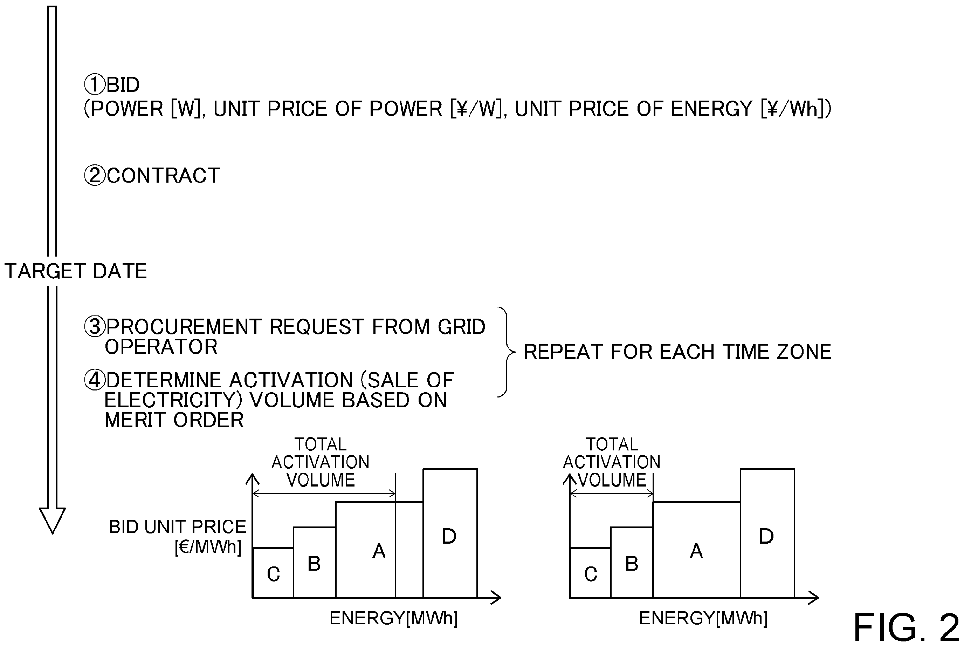

A description will be given below of a first-class market (regulation market) and a second-class market (energy market) according to the present example. The first-class market (regulation market) is a market where a grid operator procures electricity for regulation of supply and demand from the market and manage the electricity. The description will be given with reference to, as an example, Germany where the regulation market is already in operation. In the regulation market, a bid is made daily, and even after a bid is settled, whether to request activation (generation of electricity) is not determined until immediately before. FIG. 2 shows an example of a flow of sale of electricity in the first-class market (regulation market). At the time of a bid made on the previous day, a plurality of electricity generators will make bids with three types of values: a bid power kW, a unit price of power (yen/kW), and a unit price of energy (yen/kWh) for the next day. As of the previous day, the grid operator uses a power merit order list in which bids are arranged in the order of unit price of power to make a bid for electricity sources up to required power in the ascending order of unit price of power. The grid operator uses a supply merit order list in which determined electricity sources are arranged in order of unit price of energy to issue, to the electricity sources, an instruction for supply of electricity up to required regulation electricity volume at each time section, and an electricity generator generates electricity in accordance with the instruction for supply of electricity. In other words, acceptance or non-acceptance is determined on the previous day, but an actual supply volume of electricity (energy that has been sold) in each time zone is not determined in advance. Hereinafter, an electricity generation output (that is, a volume of electricity that has been sold) from each electricity generator in each time zone in accordance with the instruction for supply of electricity given from the grid operator is referred to as an activation volume, and a sum of the activation volumes of each electricity generator is referred to as a total activation volume. Further, a bid price determined according to the present example refers to the unit price of energy (yen/kWh). The unit price of power (yen/kW) may be a fixed price, or 0 yen for bid on each day, but is not limited to either of them.

A description will be given of an electricity transaction price in the second-class market with reference to the japan electric power exchange (JEPX) as an example. The Japan Electric Power Exchange has a plurality of types of markets including a day-ahead market (spot market) where electricity to be delivered next day is traded, and a forward market that allows coordinated transactions up to one hour before actual supply and demand. In the spot (day-ahead) market, each day is divided into 48 time slots (product slots) by a measurement unit of electricity (that is, 0 to 30 minutes and 30 to 60 minutes per hour), and electricity is traded in each time slot. Hereinafter, a time slot (product slot) in which a transaction is made is referred to as a bid unit time frame. An example of a unit of transaction in electricity is 1 MW (30 minutes), which is 500 kWh in terms of energy. The bid price can be set in units of 0.01 yen per kWh, for example.

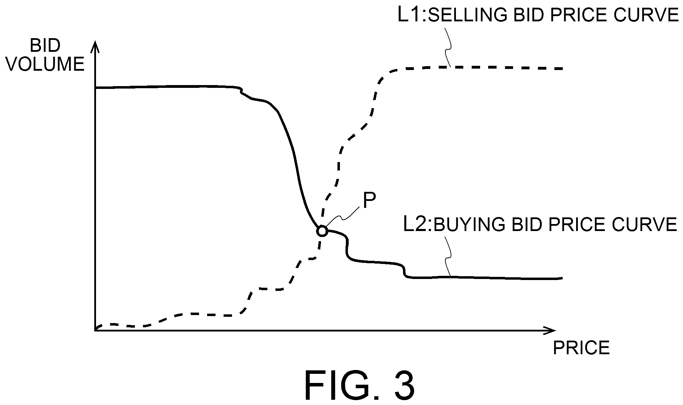

In the spot market, a deadline for bids in the bid unit time frames for electricity to be delivered next day is 10 o'clock every day. The bid unit time frames of the spot market are independent from each other, and a contract price and contract volume are determined by the blind single-price auction system for each bid unit time frame. FIG. 3 is an explanatory diagram of the blind single-price auction system. Each participant who makes a bid within the bid unit time frame makes a bid under a condition where other participants' bids are not disclosed (blind). After the deadline for bids, a selling bid price curve L1 representing bid volumes added together in the ascending order of selling bid price and a buying bid price curve L2 representing bid volumes added together in the descending order of buying bid price are calculated, and an intersection point P of the selling bid price curve L1 and the buying bid price curve L2 is calculated. The intersection point P corresponds to the contract price and contract volume for this bid unit time frame. Only a seller who offers a price lower than the contract price can sell a product (electricity) at the contract price, and only a purchaser who bids a price higher than the contract price can purchase the product (electricity) at the contract price.

In the forward market, as in the spot market, electricity for 24 hours is traded as 48 products that result from dividing 24 hours into 30-minute frames. Note that the continuous trading session method in which transactions (bids and contracts) are repeated for each product in real time up to one hour before the delivery of the product is applied.

As described above, there are a plurality of types of electricity trading markets that allow transactions to be made within the same bid unit time frame (time slot). The electricity trading markets have different contract methods and bid deadlines (gate closing times), and may have market prices greatly different from each other within the same bid unit time frame (time slot). Further, as described above, in the first-class market (regulation market), a sales price of electricity can be set as a bid price when a bid is made, but a sales volume of electricity (activation volume) is determined based on the supply merit order list and therefore cannot be controlled by a trader. On the other hand, in the second-class market (spot market, same-day market), the sales volume of electricity (bid volume) can be set when a bid is made, but the sales price of electricity (bid price) cannot be controlled by the trader. It is important to determine an optimum bid volume ratio in terms of risk/return indicator for such two types of markets with different features.

Examples of risks include selling electricity at a low price in the second-class market, and smaller activation volume and total sales (total return) than expected in the first-class market. Examples of returns include larger total sales (total return) resulting from selling electricity at a high price in the second-class market and an increase in total sales (total return) due to a larger activation volume in the first-class market. Therefore, it is necessary to determine a bid ratio of energy to be traded between the first-class market and the second-class market, that is, to formulate a market portfolio suitable for electricity to be traded.

The market data acquisition part 2 transmits a request for acquiring result data to the electricity trading market system, and acquires, from the electricity trading market system, the result data containing a result value representing a sale of electricity or a purchase of electricity in the first-class market.

Example of the result value include a total activation volume (KW) for each unit time frame (transaction date and time) of the first-class market in the electricity exchange and an average of purchase prices of the grid operators (that is, an average of sales price of electricity of the electricity generators). Further, when the bid price and bid power of each of the electricity generators who have received bids are individually disclosed, the bid price and bid power may be used as the result values. Examples of the result value further include a bid volume, a volume of electricity demand, and an electricity generation output from a renewable energy source. According to the present example, the result value includes at least the total activation volume (KW) and the average of purchase prices of the grid operators.

The market data acquisition part 2 stores the result data thus acquired into the instance data storage 12. The market data acquisition part 2 may transmit a request for acquiring result data at regular time intervals to acquire the result data that has not been acquired. Alternatively, the market data acquisition part 2 may designate an acquisition target period and acquire result data belonging to the target period thus designated from the electricity trading market system. Alternatively, the market data acquisition part 2 may acquire the result data by push notification from the electricity trading market system. The market data acquisition part 2 may acquire the result data from the electricity trading market system by a method other than the method described herein.

The calendar information storage 19 stores calendar information containing each date and attribute information. Examples of the attribute information include classification information for use in determination of whether each date is a weekday, a holiday, or a national holiday. Day-of-week information representing the day of the week of each date is further provided. Holiday event information representing the name of a holiday is further provided. Classification information on time zone such as daytime, midnight, and commuting hours is further provided. Season information (summer and winter) is further provided. Information on large sports events and festivals is further provided.

The calendar information setting part 20 retrieves the calendar information corresponding to the date and time of the result data stored in the instance data storage 12 from the calendar information storage 19 and stores the information in the instance data storage 12.

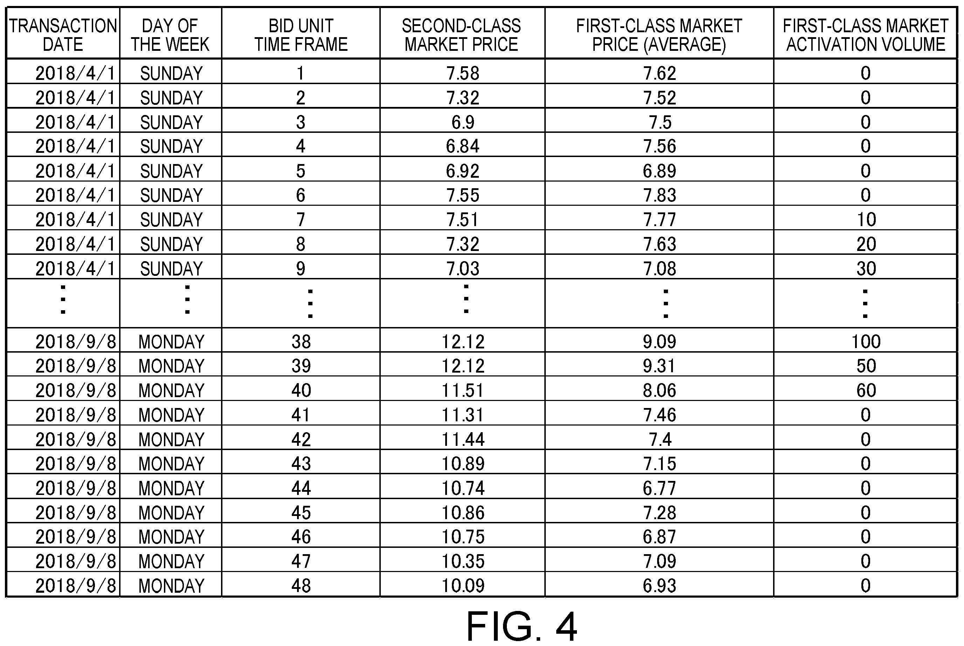

FIG. 4 shows an example of the instance data stored in the instance data storage 12 in a table format. The instance data contains the result data and the calendar information, the result data and the calendar information being associated with each other via the date and time. Specifically, the instance data contains a transaction date, a day of the week, a bid unit time frame of the second-class market, a transaction price in the second-class market, an average of transaction prices in the first-class market corresponding to each bid unit time frame (average of purchase prices of the grid operators), and an activation volume in the first-class market corresponding to each bid unit time frame. Herein, each bid unit time frame of the second-class market is set to 30 minutes, and an ID number of each bid unit time frame is set in a column of the bid unit time frame. A bid is made daily in the first-class market, that is, the bid unit of the first-class market corresponds to time frames 1 to 48 of the bid unit of the second-class market.

For example, a bid unit time frame 2 of the second-class market corresponds to a transaction time of 30 minutes from 0:30 to 1:00. A set of the transaction date and the bid unit time frame represents a transaction date and time. For example, the bid unit time frame 2 on the transaction date of April 1, 2018 corresponds to transaction date and time of April 1, 2018 0:30 to 1:00. The bid unit for April 1, 2018 of the first-class market corresponds to the bid unit time frames 1 to 48 of the second-class market on April 1.

A second-class market price is a transaction price of electricity traded in each market at a corresponding transaction time. A spot transaction price and forward transaction price are each a unit price of electricity of 1kWh. In this example, only one electricity trading market of the second class is provided, but two or more types of electricity trading markets may be provided. Also in this case, it is sufficient that the information on the market price of each electricity trading market corresponding to the same bid unit time frame be included.

The similarity score calculation part (similarity calculation part) 14 calculates a similarity score representing a similarity between a bid unit (date in this example) of the first-class market where a corresponding transaction is made and a past bid unit stored in the instance data storage 12. Depending on a definition of the similarity score, the higher the similarity is, the larger the similarity score becomes, or the higher the similarity is, the smaller the similarity score becomes, but both cases are possible. According to the present example, suppose that the higher the similarity is, the larger the similarity score becomes. The bid unit where a corresponding transaction is made is a future date (for example, tomorrow). The similarity score calculation part 14 sets the similarity score thus calculated in the instance data. An example of a method for calculating the similarity score will be given below.

As an example, the similarity score is set to a positive predetermined value (for example, 1.0 or 0.1) for a date that falls within a range of from a certain past date to a bid date where a corresponding transaction is made. The similarity scores for the other dates are set to 0.0.

A method is available as another example in which the larger the number of dates going back from the target date is, the lower the similarity score becomes. Another method is available in which the similarity score is changed in accordance with whether attributes such as a day of the week, a holiday, and a weekday are the same.

The similar instance data extraction part 13 extracts similar instance data from past transaction result data. More specifically, the similar instance data extraction part 13 extracts, as the similar instance data, a plurality of pieces of instance data whose similarity scores are equal to or greater than a threshold from the instance data storage 12, and stores the similar instance data thus extracted into the similar instance data storage 15. Alternatively, all pieces of instance data whose similarity scores have been calculated are extracted as the similar instance data and stored into the similar instance data storage 15. The pieces of instance data thus extracted may be sorted in the ascending or descending order of similarity score, and a fixed number of upper-ranked pieces of instance data may be extracted. The similarity score may be normalized so that the sum of the similarity scores of the pieces of similar instance data becomes 1. The similar instance data extraction part 13 may acquire the threshold or the number of pieces of instance data to be extracted as a parameter from the input part 3. The parameter may be input by the user from the input part 3.

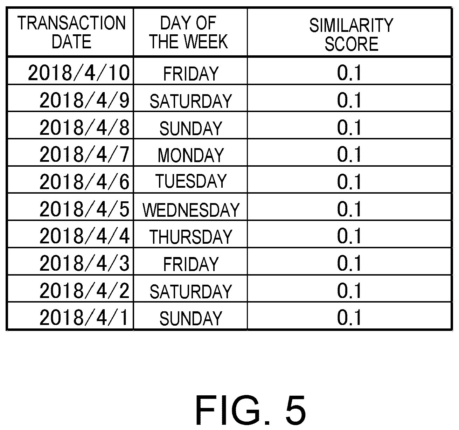

FIG. 5 shows an example of the similar instance data extracted by the similar instance data extraction part 13. A bid date where a corresponding transaction is made is April 11, 2018 (Wednesday). A similarity score of 0.1 is calculated for pieces of instance data of similar dates in the past 10 days out of the pieces of instance data shown in FIG. 4. A similarity is set to 0 for pieces of data 11 days ago or earlier, and the instance data having the similarity score of 0 is not extracted because the similarity score is less than the threshold. Although not shown in FIG. 5, pieces of data corresponding to the bid unit time frames 1 to 48 are extracted for a corresponding similar date as in the example shown in FIG. 4.

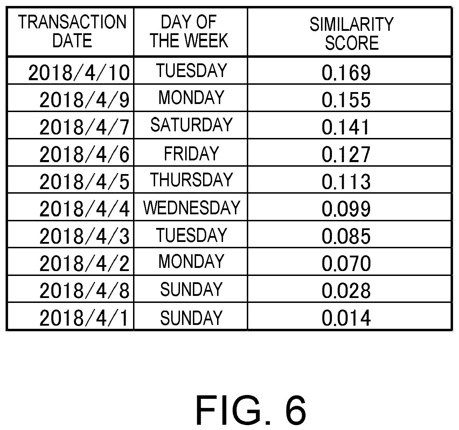

FIG. 6 shows examples of similarity scores calculated by a method in which the larger the number of dates going back from the target date is, the lower the similarity score becomes, and the similarity score is set high when attributes indicating a day of the week are the same (in this example, weekdays or holidays). Pieces of instance data of 10 similar dates are extracted in descending order of similarity score. Since the target date is a weekday that is April 11, similarity scores of weekdays are calculated to be high. In FIG. 6, the pieces of instance data are sorted in the descending order of similarity score. The similarity score is normalized so that the sum of the similarity scores of the pieces of instance data becomes 1.

According to the first example, the bid contents determination part 16 temporarily sets a bid power kW to be traded (for which a bid is made) and a unit price of energy (yen/kWh) for which a bid is made in the first-class market. The temporarily set bid power is called a temporary bid power, and the temporarily set unit price of energy is called a temporary bid price.

Examples of a method for setting the temporary power and the temporary price include a so-called grid search in which a range between the upper and lower limit values are divided at equal intervals, and all combinations of the temporary power and the temporary price are comprehensively searched. For example, when the temporary power is allowed to fluctuate within a range of from 1 to 2 MW, and the temporary price is allowed to fluctuate within a range of from 100 to 200 yen, 10 divisions requires a total of $10^2$ combinations to be searched, as described below. Herein, it is expressed as (temporary bid power, temporary bid price).

(1, 100) -> (1, 110) -> (1, 120) -> ... -> (2, 190) -> (2, 200)

Examples of the method for searching ratio combinations include a hill-climbing method, a simulated annealing method, a genetic algorithm, particle swarm optimization (PSO), and the like. For example, in the hill-climbing method, when the temporary bid power and temporary bid price set in the previous loop are randomly changed in small increments, and an indicator (risk/return indicator to be described later or the like) improves accordingly, a ratio after the change is employed; otherwise, the temporary bid power and temporary bid price are returned to the previous temporary bid power and temporary bid price, and this process is repeatedly executed. In the simulated annealing method, even when the risk/return indicator has not improved, a ratio after the change is employed in a stochastic manner. According to the present example, the search method is not particularly limited.

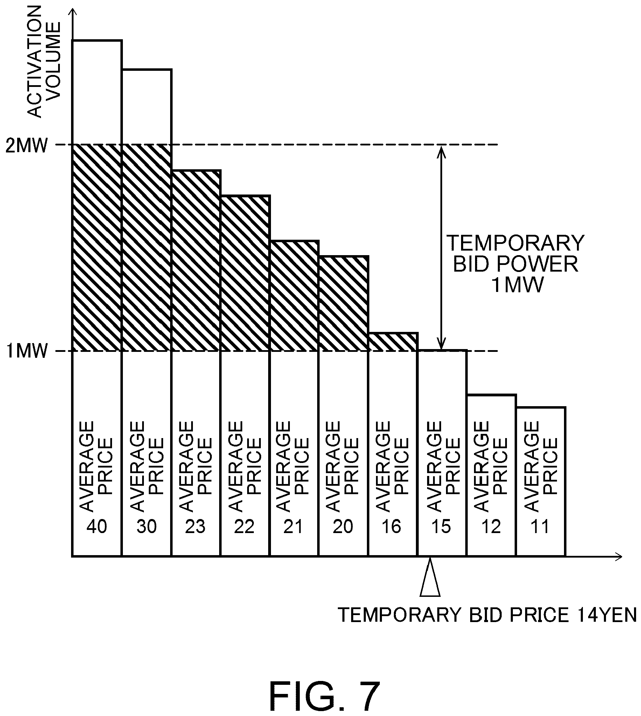

The relation calculation part 6 causes the transaction volume calculation part 7 to calculate the activation volume (transaction volume) of each similar date when a transaction is made in accordance with a combination of a designated temporary bid power and temporary bid price, and causes the profit calculation part 8 to calculate an evaluation amount from the transaction volume and the temporary bid price, so as to calculate a relation between the activation volume and the evaluation amount. In order for the transaction volume calculation part 7 to calculate the activation volume (transaction volume), the result data of each similar date extracted as a part of instance data is used. An example of a method for calculating the activation volume (transaction volume) when the total activation volume and the average price for each time zone are obtained as the result data will be described with reference to FIG. 7.

FIG. 7 shows time zones of a certain similar date arranged in the descending order of activation volume from the left side, and one day is divided into 10 time zones. As described above, the grid operator uses the supply merit order list, in which the determined electricity sources are arranged in the order of the unit price of energy, and issues, to the electricity sources, an instruction for supply of electricity up to required regulation electricity volume at each time section. On the other hand, when electricity generators generate electricity in accordance with the instruction for supply of electricity, the average price will become higher in principle because an electricity generator who has made a bid at a higher price in a time zone that is larger in activation volume will be activated. Using this tendency, first, an activation volume P in a time zone that is smallest in activation volume among time zones that are higher in average unit price than the temporary bid price is obtained (1 MW in the example in the figure). Then, a time zone in which it is certain that a bid has been made with a bid price higher than the temporary bid price (time zone in which the average unit price is higher than the temporary bid price) is extracted, and a value that results from subtracting the above-described P (1 MW) from the activation volume in each time zone from is calculated as its own activation volume. For time zones in which the activation volume exceeds the temporary bid power, the bid power is set as the upper limit. In the example shown in FIG. 7, a hatched portion indicates the activation volume when the temporary bid price is 14 yen, and the temporary bid power is 1 MW. As described above, the transaction volume calculation part 7 uses the result data containing the activation volume in each time zone of the time unit (in this example, one day) of bids in the first-class market on each similar date extracted as part of the instance data to calculate the activation volume from the temporary bid power and the temporary bid price on the assumption that a bid distribution is similar to the bid distribution of the similar date. The method for calculating the activation volume is not limited to this method.

Further, the similarity score of each piece of similar instance data (similar date) represents a frequency. Relational data in which the frequency of each piece of similar instance data and the evaluation amount corresponding to each piece of similar instance data are associated with each other is created. In this example, a probability distribution (pseudo-probability distribution) in which the similarity score is regarded as an occurrence probability (occurrence frequency), and the evaluation amount and the probability are associated with each other is created. The pseudo-probability distribution is calculated for each of a plurality of bid contents (combination of the temporary bid power and the temporary bid price).

The evaluation amount is, for example, a sum of the calculated transaction amounts and can be calculated by multiplying the calculated activation volume by the temporary bid price. Further, the evaluation amount may be a profit that results from subtracting an electricity procurement cost from the sum of transaction amounts. As the relational data, a pseudo-probability distribution in which the profit and the probability (frequency) are associated with each other is created. Note that a sales amount may be used instead of the profit. In such a case, a pseudo-probability distribution in which the sales amount and the probability are associated with each other may be created.

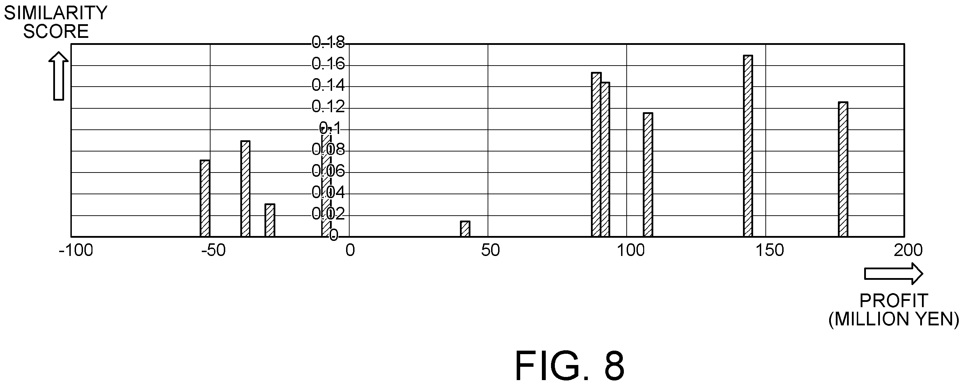

FIG. 8 is a diagram showing an example of the pseudo-probability distribution of the profit. A horizontal axis represents the profit calculated by the above-described method. A vertical axis represents the similarity score of similar instance data.

The indicator calculation part 11 calculates an indicator indicating a degree of risk and return based on the profit calculated by the profit calculation part 8 and the similar instance data. More specifically, the indicator calculation part 11 calculates at least one indicator (referred to as a risk/return indicator) using the pseudo-probability distribution corresponding to each bid volume ratio. An example of the risk/return indicator will be given below.

As a first example of the risk/return indicator, a weighted average value of the profit weighted by the similarity score obtained from each similar instance data is calculated as an expected profit value. The calculation expression is shown in

$$\frac{1}{M}\sum_{m=1}^{M} W_m(P-C)\sum_{n=1}^{N} R_{m,n} \quad \cdots (1)$$

M is the number of pieces of similar instance data, N is the number of time frames (the division number of time zones of one day), P is the temporary bid price, C is the procurement cost, Wm is the similarity score of similar instance data m, Rm,n is the activation volume in the time zone n in the similar instance data m calculated by the above-described method. As described above, the similarity score Wm is normalized so that the sum of similarity scores of all the pieces of similar instance data becomes 1. Accordingly, the indicator calculation part 11 can calculate a first indicator from the weighted average value of the profit corresponding to the similar instance data.

As a second example of the risk/return indicator, in the pseudo-probability distribution, the sum of similarity scores is sequentially calculated from instance data with a lower profit. A similar instance data group where the sum of the similarity scores matches a lower percentile that is a reference value (first reference value) or is lower than (or equal to or greater than) and closest to the lower percentile is identified, and a profit of similar instance data with the highest profit in the similar data group (lower percentile profit) is calculated as a risk/return indicator.

For example, in the pseudo-probability distribution shown in FIG. 8, in the case of 10th percentile, a profit of similar instance data ranked second to the lowest becomes the risk/return indicator of the second example. In the case of 30th percentile, a profit of similar instance data ranked fourth to the lowest becomes the risk/return indicator of the second example. Accordingly, the indicator calculation part 11 can add similarities of a plurality of pieces of similar instance data in the ascending order of the profits associated with the pieces of similar instance data, and calculate the second indicator from the profit of the similar instance data where the sum of the similarities is equal or closest to the first reference value.

As a third example of the risk/return indicator, using the lower percentile that is the reference value (second reference value), a similar instance data group that falls within a range of from the lowest profit to the lower percentile (or just before the lower percentile) is identified as represented by the following Expression 2, and a sum of profits of the similar instance data group (lower percentile expected value) is used as the risk/return indicator.

$$\frac{1}{\sum_{m=1}^{T} W_m}\sum_{m=1}^{T} W_m(P-C)\sum_{n=1}^{N} R_{m,n} \quad \cdots (2)$$

In Expression 2, suppose that the pieces of similar instance data m are sorted in the ascending order of profit. T represents the number of pieces of similar instance data that fall within the lower percentile. The other symbols have the same meanings as in Expression 1.

For example, in the pseudo-probability distribution shown in FIG. 8, in the case of 30th percentile, an average of the profits of the pieces of similar instance data ranked fourth (or third) or lower to the lowest may be weighted by the similarity scores. Accordingly, the indicator calculation part 11 can add similarities of a plurality of pieces of similar instance data in the ascending order of the profits associated with the pieces of similar instance data, and calculate the third indicator as the indicator from the profit of the similar instance data where the sum of the similarities is equal or closest to the second reference value.

As a fourth example of the risk/return indicator, in the pseudo-probability distribution, the sum of similarity scores is sequentially calculated from instance data with a higher profit. A similar instance data group where the sum of the similarity scores matches an upper percentile that is a reference value (third reference value) or is equal to or greater than (or lower than) and closest to the upper percentile is identified, and a profit of similar instance data with the lowest profit in the similar data group (upper percentile profit) is calculated as a risk/return indicator. Accordingly, the indicator calculation part 11 can add similarities of a plurality of pieces of similar instance data in the descending order of the profits associated with the pieces of similar instance data, and calculate the fourth indicator as the indicator from the profit of the similar instance data where the sum of the similarities is equal or closest to the third reference value.

As a fifth example of the risk/return indicator, in the pseudo-probability distribution, a similar instance data group that falls within a range of from the highest profit to an upper percentile (or just before the upper percentile) that is a reference value (fourth reference value) is identified, and a sum of profits of the similar instance data group (upper percentile expected value) is used as the risk/return indicator. The expression for calculating the indicator of the fifth example is the same as Expression 2. Suppose that the pieces of similar instance data m are sorted in the descending order of profit. T represents the number of pieces of similar instance data that fall within the upper percentile. Accordingly, the indicator calculation part 11 can add similarities of a plurality of pieces of similar instance data in the descending order of the profits associated with the pieces of similar instance data, and calculate the fifth indicator as the indicator from the profit of the similar instance data where the sum of the similarities is equal or closest to the fourth reference value.

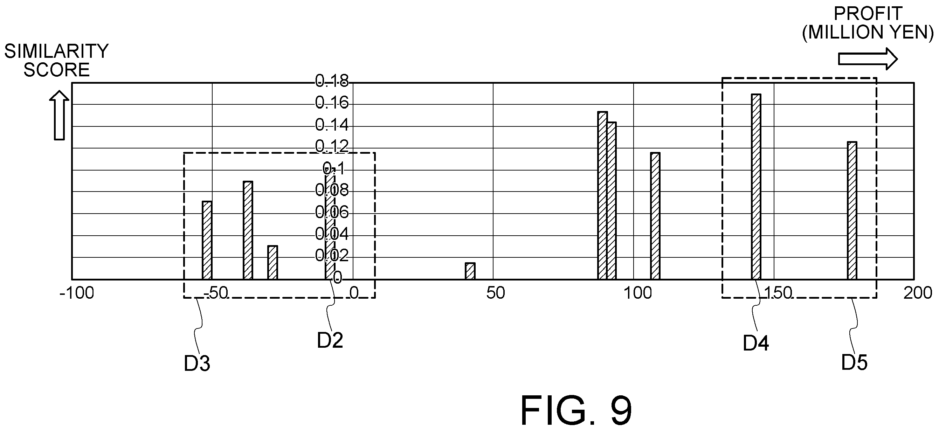

FIG. 9 is a diagram showing an example where similar instance data from which the risk/return indicators of the second to fifth examples are calculated is identified in the pseudo-probability distribution shown in FIG. 8. More specifically, on the left side of FIG. 8, similar instance data D2 from which the indicator of the profit of the lower 30th percentile (risk/return indicator of the second example) is shown. Further, in the case of the lower 30th percentile, similar instance data D3 from which the indicator of the expected value of the lower 30th percentile (risk/return indicator of the third example) is shown. On the right side of FIG. 8, similar instance data D4 from which the indicator of the profit of the upper 30th percentile (risk/return indicator of the fourth example) is shown. Further, similar instance data D5 from which the indicator of the expected value of the upper 30th percentile (risk/return indicator of the fifth example) is shown.

The strategy determination part 17 determines a trading strategy for use in determination of the risk/return indicator, the trading strategy being used by the indicator calculation part 11. For example, the trading strategy is associated with the risk/return indicator on a one-to-one basis. The strategy determination part 17 may acquire information indicating the trading strategy from the input part 3 and determine the trading strategy indicated by the information thus acquired. Alternatively, the strategy determination part 17 may identify a market price trend and determine the trading strategy based on the trend.

Examples of the trend include whether a moving average value of the most recent market price in a representative market (for example, the spot market in the case of JEPX) is rising (on an uptrend), is falling (on a downtrend), or has little change (is flat or leveling off), and the like. Examples of the trend include whether the moving average value of the sum of the average daily prices in the target first-class market is rising (on an uptrend), is falling (on a downtrend), has little change (is flat or leveling off), and the like. When the market price is on an uptrend, a risk-taking strategy is selected, when the market price is on a downtrend, a risk-off strategy is selected, and when the market price is stable, a standard strategy is selected.

The indicator calculation part 11 determines the risk/return indicator in accordance with the trading strategy determined by the strategy determination part 17, and calculates the risk/return indicator thus determined.

For example, when the trading strategy determined by the strategy determination part 17 is the standard strategy, the risk/return indicator of the first example (weighted average value based on the similarity score) is used. When the trading strategy is the risk-taking strategy, the risk/return indicator of the fourth example (upper percentile profile) or the risk/return indicator of the fifth example (upper percentile expected value) is used. When the trading strategy is the risk-off strategy, the risk/return indicator of the second example (low percentile profile) or the risk/return indicator of the third example (low percentile expected value) is used.

Note that the types of selectable trading strategies and the types of selectable risk/return indicators may include other types and are not particularly limited by the present example. For example, a plurality of upper percentile values such as 30, 40, and 50 may be set and selected as different trading strategies. Similarly, a plurality of low percentile values may be set and selected as different trading strategies.

The bid contents determination part 16 identifies a combination of a temporary bid power and a temporary bid price from which the highest risk/return indicator or the risk/return indicator that is equal to or greater than the threshold is obtained based on the risk/return indicator calculated by the indicator calculation part 11 for each temporary bid power and temporary bid price that are temporarily set. For example, the indicator calculation part 11 may calculate the risk/return indicator for all the combinations by the grid search described above, and identify a combination of the temporary bid power and the temporary bid price corresponding to the highest risk/return indicator. Alternatively, the calculation of the risk/return indicator by changing the combination of the temporary bid power and the temporary bid price in accordance with the above-described search algorithm is repeated, and the process is terminated when the number of repetitions reaches a preset number, or the process time reaches a time limit. Then, the temporary bid power and the temporary bid price from which the highest risk/return indicator has been calculated until the end of the process may be identified.

Alternatively, when the calculated risk/return indicator does not improve any more, or when a degree of improvement decreases, the process is terminated, and the temporary bid power and the temporary bid price from which the highest risk/return indicator has been calculated until the end of the process may be identified.

The bid contents determination part 16 supplies, to the output part 18, information such as the identified temporary bid power and temporary bid price, the pseudo-probability distribution corresponding to the identified temporary bid power and temporary bid price, the risk/return indicator, and an occurrence of trade-off. The output part 18 outputs the information thus supplied. The information thus output is confirmed by the user.

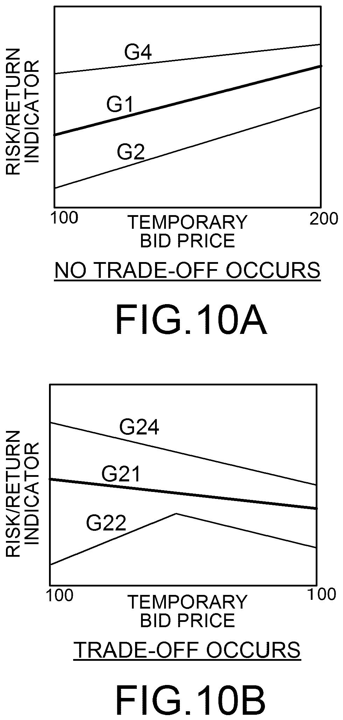

A trade-off between risk/return indicators will be described with reference to FIG. 10A and FIG. 10B.

FIG. 10A and FIG. 10B are diagrams showing visualized examples of three types of risk/return indicators when the temporary bid price is changed from 100 to 200 yen with the temporary bid power kept constant.

FIG. 10A shows an example when no trade-off occurs. A graph G1 representing the risk/return indicator of the first example (weighted average value based on the similarity score) and a graph G2 representing the risk/return indicator of the second example (lower percentile profit) when the risk-off strategy is selected are shown. Further, a graph G4 representing the risk/return indicator of the fourth example (upper percentile profit) when the risk-taking strategy is selected is shown. The temporary bid prices that maximize the three risk/return indicators are the same. Therefore, in this case, there is no trade-off between risk and return.

In the example shown in FIG. 10A, spot ratios (bid volume ratios) that maximize the three types of risk/return indicators are the same, so that a determination can be made that the same temporary bid price is the most suitable from the viewpoint of any of the risk/return indicators.

FIG. 10B shows an example where a trade-off occurs. A graph G21 representing the risk/return indicator of the first example (weighted average value based on the similarity score), a graph G22 representing the risk/return indicator of the second example (lower percentile profit), and a graph G24 representing the risk/return indicator of the fourth example (upper percentile profit) are shown. The temporary bid prices that maximize the three risk/return indicators do not match. Therefore, in this case, there is a trade-off relation between risk and return.

In the example shown in FIG. 10B, a spot ratio (bid volume ratio) that maximizes the lower percentile indicator of the graph G22 and a ratio that maximizes the upper percentile indicator of the graph G24 do not match. Therefore, a recommended temporary bid price differs in a manner that depends on the selected trading strategy.

As described above, the bid contents determination part 16 determines that there is a trade-off relation between risk and return when the bid volume ratios that maximize (or minimize) the plurality of types of risk/return indicators do not match. The bid contents determination part 16 outputs, to the output part 18, information indicating that the optimum bid volume ratios do not match among the plurality of types of risk/return indicators (information indicating that a trade-off has occurred). The user can determine, based on displayed information, whether to employ the selected trading strategy as it is.

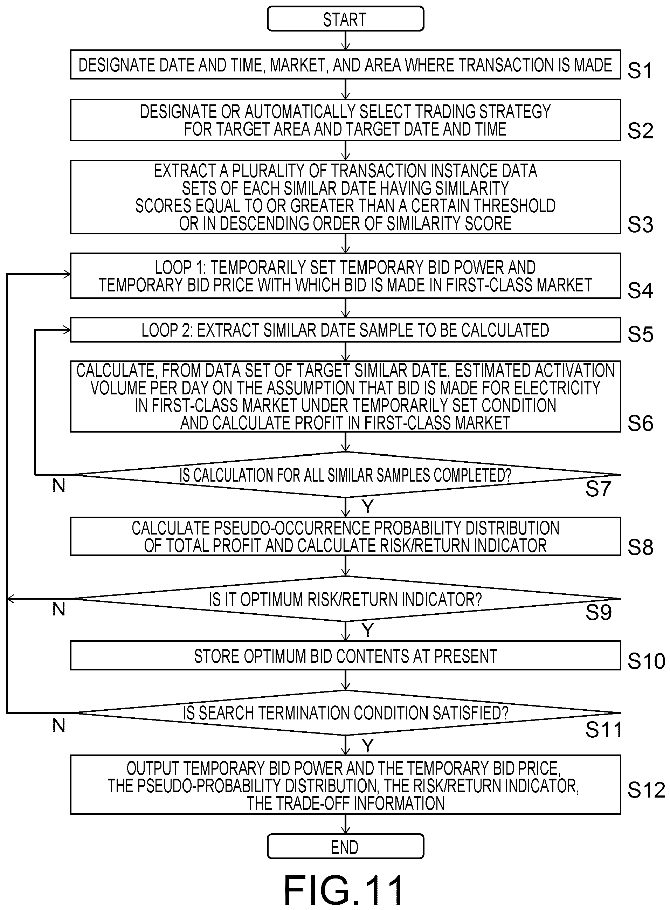

FIG. 11 is a flowchart of an example of the operation of the information processing apparatus 10 according to the present example. First, a date and area where a corresponding transaction is made are determined (step S1). The date and area may be determined based on the information input by the user, or alternatively, may be determined by another predetermined method.

The strategy determination part 17 determines a market price trend based on past instance data stored in the instance data storage 12. The strategy determination part 17 determines a trading strategy to be applied to the selected bid unit time frame from a plurality of trading strategies prepared in advance (step S2). Alternatively, the user inputs information indicating the trading strategy from the input part 3, and the strategy determination part 17 determines the trading strategy based on the information input by the user (step S2).

The similar instance data extraction part 13 obtains, with the similarity score calculation part 14, a similarity score between data of the bid unit frame (bid date) of the first-class market where a corresponding transaction is made and past instance data of the bid unit in the instance data storage 12. As the similar instance data (similar date), Instance data whose similarity score is equal to or greater than a certain threshold is extracted, or a fixed number of pieces of instance data are extracted in the descending order of similarity score (step S3).

Next, the bid contents determination part 16 temporarily sets a temporary bid power and a temporary bid price for a bid to be made in the first-class market (step S4). When a similar date sample to be calculated is extracted (step S5), and the transaction volume calculation part 7 uses a data set of target similar dates to calculate an activation volume per day on the assumption that a bid is made for electricity in the first-class market under a temporarily set condition, and the profit calculation part 8 calculates a profit in the first-class market on the assumption that a bid has been made with the temporarily set bid contents (step S6).

Next, a determination is made as to whether a process from step S4 to step S6 have been executed on all the pieces of similar instance data (step S7). When some pieces of similar instance data that have not been processed yet are present, one of the pieces of similar instance data is selected, and the process from step S4 to step S6 is repeated on the similar instance data thus selected.

When the process from step S4 to step S6 are executed on all the pieces of similar instance data, the relation calculation part 6 generates a pseudo-probability distribution based on information on the profit and similarity score associated with each piece of market transaction instance data by considering the similarity score as an occurrence probability (step S8). Further, the indicator calculation part 11 selects a risk/return indicator corresponding to the trading strategy determined by the strategy determination part 17, and calculates the selected risk/return indicator based on the pseudo-probability distribution (step S8).

Next, a determination is made as to whether it is an optimum risk/return indicator (step S9). Herein, when the calculated risk/return indicator is a value better than a parameter (the optimum value at present) to which an initial value is set (or updated) (YES in step S9), the temporary bid power and temporary bid price temporarily set in step S4 are set to the parameter (parameter is updated) (step S10). That is, the best bid contents at present are stored. Herein, the parameter includes the temporary bid power and temporary bid price, the pseudo-probability distribution, the risk/return indicator, the trade-off information, and the like.

On the other hand, when a determination is made in step S9 that the risk/return indicator is less than the parameter, the parameter is not updated, and step S4 and subsequent steps are repeated.

After step S10, a determination is made as to whether a preset termination condition is satisfied (step S11), and if the termination condition is satisfied (YES in step S11), the temporary bid power and the temporary bid price, the pseudo-probability distribution, the risk/return indicator, the trade-off information, and the like indicated by the parameter are output to the output part 18, and the process for the bid unit frame (bid date) selected in step S1 is brought to an end (step S12). For example, in the case of grid search, when all combinations have been searched, the termination condition is satisfied. Alternatively, the termination condition may be satisfied when a preset number of repetitions or a preset time limit is reached, or when a degree of improvement in the risk/return indicator decreases. When the termination condition is not satisfied (NO in step S11), the process returns to step S4, and a process from step S4 to step S11 is repeated.

As described above, according to the present example, the bid contents for the first-class market are determined based on the risk/return indicator in accordance with the trading strategy, so that the user can obtain a desired transaction result with high accuracy. As a result, it is possible to efficiently support transactions of users in a plurality of trading markets.

(Second example)

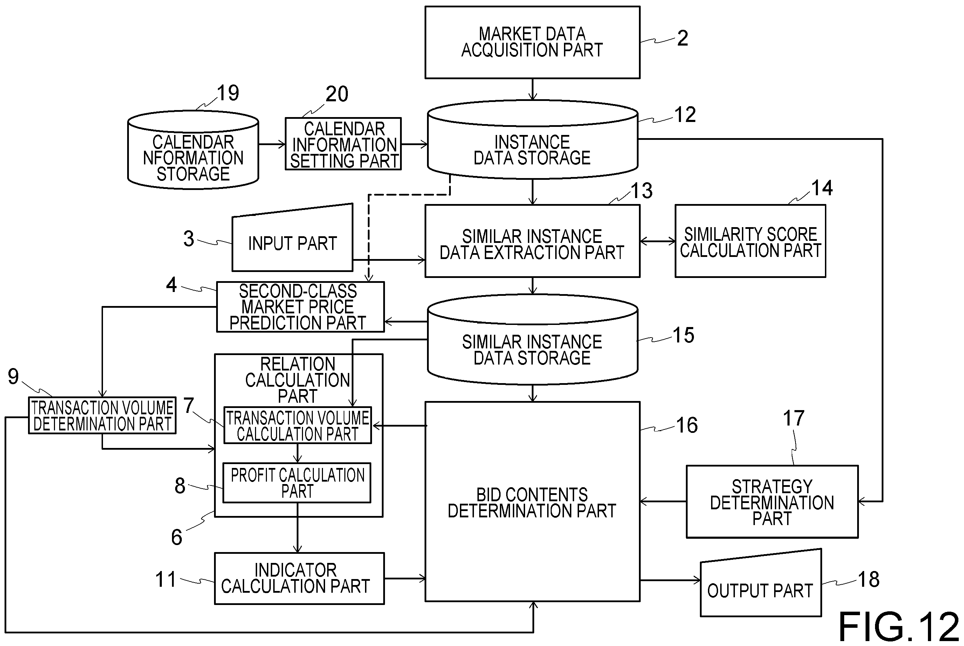

FIG. 12 is a block diagram of an information processing apparatus according to a second example. An information processing apparatus 10a according to the present example includes a second-class market price prediction part 4 and a transaction volume determination part (third determination part) 9 in addition to the components of the information processing apparatus 10 of the first example. The second example is characterized in that, for the second-class market (energy market such as the spot market or the forward market described above) different from the first-class market, a profit when a bid is made in the second-class market for remaining energy after a bid is made in the first-class market is calculated on each similar date, and a risk/return indicator is calculated from the pseudo-probability (frequency) distribution of the sum of profit in the first-class market.

This makes it possible to determine the bid contents for the first-class market that can maximize the profit in a combination of the first-class market and the second-class market. The second-class market price prediction part 4 predicts each market price based on the past result values of the second-class market price stored in the instance data storage 12 or the similar instance data storage 15. A known technique is used as the prediction method, and the method is not particularly limited by the present example.

The transaction volume determination part 9 determines whether to make a bid in the second-class market in each time zone of the second-class market based on the prediction result from the second-class market price prediction part 4. For example, a bid is made when the price prediction value is higher than the purchase cost of electricity, and a bid is not made when the price prediction value is lower than the purchase cost of electricity. A plurality of the second-class markets may be provided, and in this case, when a prediction price of a market with the highest prediction price is higher than the purchase cost of electricity, a bid is made in the market is bid, otherwise the bid is not made.

As described above, according to the second example, since the risk/return indicator is calculated based on the profits in the first-class market and the second-class market, bid contents for the first-class market that can maximize the profit in the combination of the first-class market and the second-class market can be determined.

(Third example)

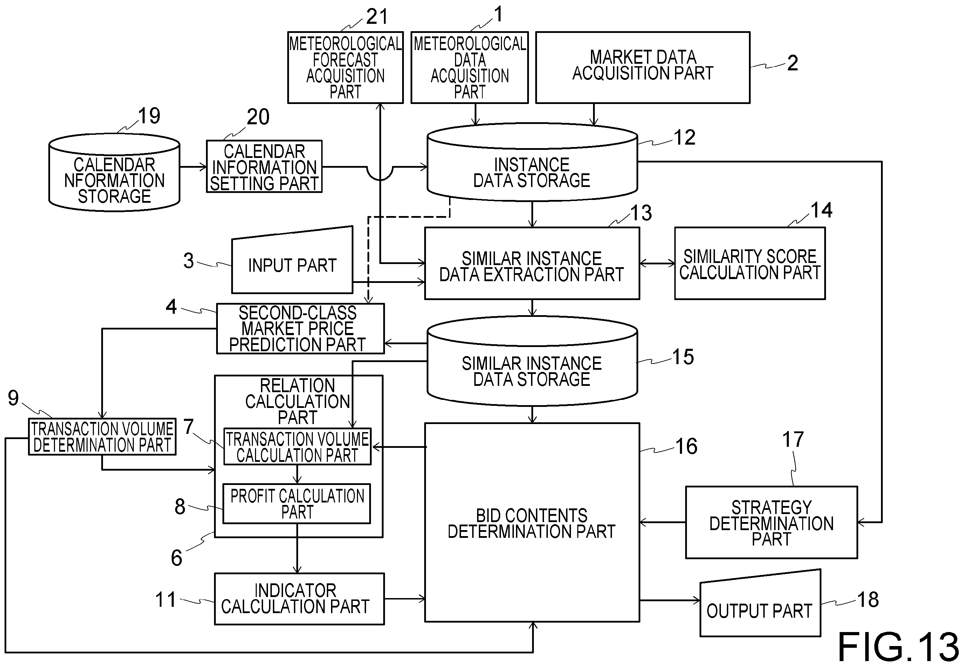

FIG. 13 is a block diagram of an information processing apparatus 10b according to a third example. According to the present example, a meteorological data acquisition part 1 and a meteorological forecast acquisition part 21 are included in addition to the components of the information processing apparatus 10 of the first example or the components of the information processing apparatus 10a of the second example. One of the features of the third example is that the similarity score is calculated from a meteorological prediction value on a date where a corresponding transaction is made.

The meteorological data acquisition part 1 acquires a result value of meteorological information (meteorological quantity) from an external system. Note that, when the result value of the meteorological quantity cannot be acquired, the last prediction value from a meteorological forecast part may be used instead of the result value.

The meteorological forecast acquisition part 21 acquires the meteorological quantity at a representative point in an area where the electricity trading market is located. The meteorological forecast acquisition part 21 obtains the prediction value of the meteorological quantity from the external system of the apparatus, such as a meteorological quantity server, a web service, or a cloud service provided by domestic and foreign government agencies such as the Japan Meteorological Agency, private businesses, or international organizations. Further, the meteorological forecast acquisition part 21 may predict a meteorological quantity by using a numerical prediction model associated with above area. The numerical prediction model is, for example, a global ensemble information processing apparatus, a global model, a meso model, or a local model.

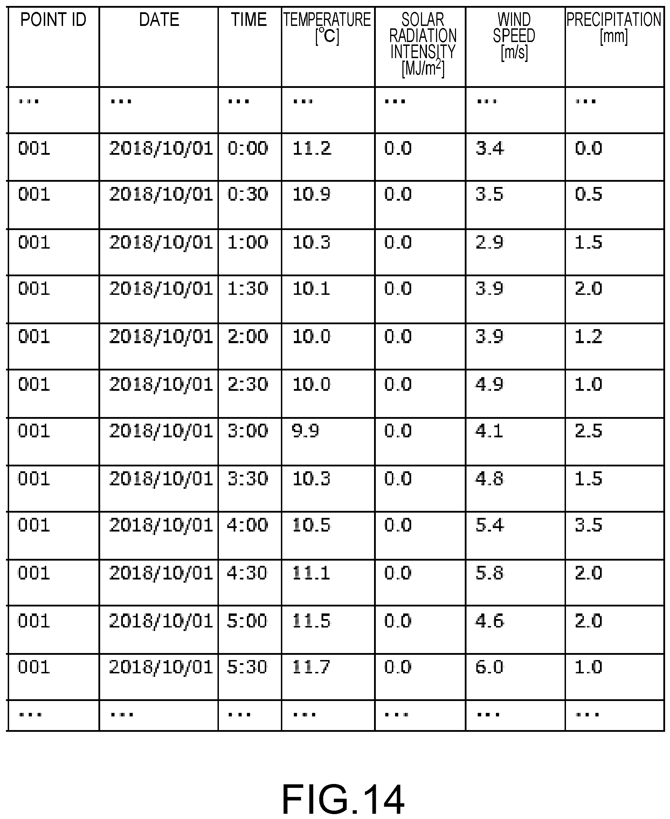

FIG. 14 shows an example of data containing result values of meteorological quantities acquired by the meteorological data acquisition part 1. A point ID, date, time, and meteorological result value are stored. In this example, result values from 0:00 to 5:30 on October 1, 2018 at a point with the point ID of 001 are shown. A time interval is 30 minutes, but a different interval such as 10 minutes or 1 hour may be used. In this example, the meteorological quantities include a temperature, solar radiation intensity, wind speed, and precipitation, but are not limited to those shown herein. The point 001 corresponds to, for example, a representative point in the area where the electricity trading market is located. Data on the prediction value of the meteorological quantity acquired by the meteorological forecast acquisition part 21 has the same format as shown in FIG. 14.

In the instance data storage 12, the result data of a plurality of electricity trading markets, the calendar information, and the data acquired by the meteorological data acquisition part 1 are merged with each other with the date and time as a key.

The similarity score calculation part 14 calculates a Euclidean distance between a vector (coordinates) including the prediction value of each meteorological quantity corresponding to instance data of each past date and a vector (coordinates) including the result value of the meteorological quantity of each instance data. The vector (coordinates) represents, for example, coordinates in a feature space having, as components, meteorological quantities (temperature, solar radiation intensity, precipitation, and the like) that may affect the electricity market price, for example.

The similarity score calculation part 14 calculates a similarity score that decreases as the Euclidean distance between the vector of the prediction value of each meteorological quantity and the vector of the result value of each instance data increases. An example of the expression for calculating the similarity score is shown in the following Expression 3. m is the instance data, Vm is the Euclidean distance, and Wm is the similarity score.

$$W_m = \frac{1}{V_m \times \sum \frac{1}{V_k}} \quad \cdots (3)$$

As in the first example, the similar instance data extraction part 13 extracts, as similar instance data, instance data whose similarity score calculated by the similarity score calculation part 14 is equal to or greater than the threshold or a fixed number of pieces of instance data in the descending order of similarity score from past instance data.

The structures and operations of the other blocks are the same as in the first or second example, and therefore their explanations will be omitted.

As described above, according to the third example, calculating the similarity score using the meteorological quantity make it possible to extract past instance data that is more approximate to a meteorological condition at the date and time where a corresponding transaction is made. As a result, the bid contents for each electricity trading market can be determined with higher reliability.

(Hardware structure)

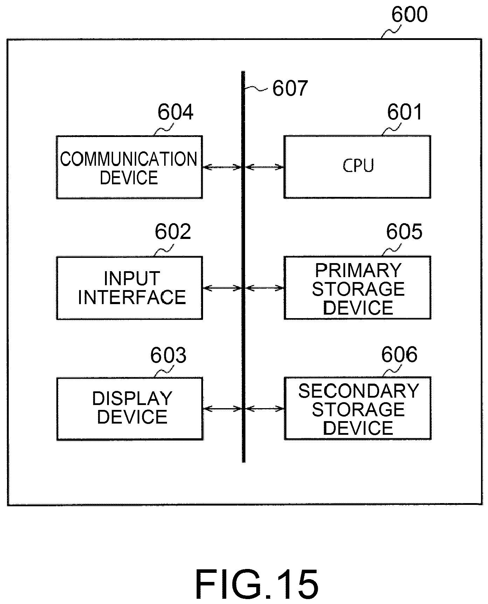

FIG. 15 is a diagram showing a hardware structure of the apparatus shown in FIG. 1, FIG. 12, or FIG. 13. The apparatus shown in FIG. 1, FIG. 12, or FIG. 13 may be implemented by a computer apparatus 600. The computer apparatus 600 includes a CPU 601, an input interface 602, a display device 603, a communication device 604, a primary storage device 605, and a secondary storage device 606, and all the components are interconnected over a bus 607.

The central processing unit (CPU) 601 executes an information processing program, which is a computer program, on the primary storage device 605. The information processing program is a program by which the above-described functional configurations of the apparatus are implemented. The information processing program may not include a single program, or alternatively, may include a combination of a plurality of programs or scripts. Each functional configuration is implemented by the information processing program executed by the CPU 601.

The input interface 602 is a circuit for inputting operation signals from input devices such as a keyboard, a mouse, and a touch screen to the apparatus. The input interface 602 corresponds to the input part 3.

The display device 603 displays data output from the apparatus. The display device 603 is, for example, a liquid crystal display (LCD), an organic electroluminescence display, a cathode ray tube (CRT), or a plasma display (PDP), but is not limited to such a device. The data output from the computer apparatus 600 can be displayed on the display device 603. The display device 603 corresponds to the output part 18.

The communication device 604 is a circuit that allows the apparatus to communicate with an external device by radio or wire. Data can be input from the external device via the communication device 604. The data input from the external device can be stored in the primary storage device 605 or the secondary storage device 606.

The primary storage device 605 stores the information processing program, data necessary for executing the information processing program, data generated during the running of the information processing program, and the like. The information processing program is loaded and executed on the primary storage device 605. The primary storage device 605 is, for example, a RAM, a DRAM, or an SRAM, but is not limited to such a device. Each storage or database shown in FIG. 1 or FIG. 13 may be constructed on the primary storage device 605.

The secondary storage device 606 stores the information processing program, data necessary for executing the information processing program, data generated during the running of the information processing program, and the like. The above-described information processing program and data are loaded onto the primary storage device 605 upon execution of the information processing program. The secondary storage device 606 is, for example, a hard disk, an optical disc, a flash memory, and a magnetic tape, but is not limited to such a medium. Each storage or database shown in FIG. 1, FIG. 12, or FIG. 13 may be constructed on the secondary storage device 606.

The information processing program may be pre-installed in the computer apparatus 600 or may be stored in a storage medium such as a CD-ROM. Further, the information processing program may be uploaded on the Internet.

Further, the apparatus may be implemented by a single computer apparatus 600, or alternatively, may be implemented as a system including a plurality of the computer apparatuses 600 connected to each other.

While certain examples have been described, these examples have been presented by way of example only, and are not intended to limit the scope of the disclosures. Indeed, the novel methods and systems described herein may be embodied in a variety of other forms; furthermore, various omissions, substitutions and changes in the form of the methods and systems described herein may be made without departing from the spirit of the disclosures. The accompanying claims and their equivalents are intended to cover such forms or modifications as would fall within the scope and spirit of the disclosures.

**Claims**

1. An information processing apparatus comprising:

   a similar instance data extraction part (13) that extracts similar instance data from past transaction result data;
   a profit calculation part (8) that calculates a profit on an assumption that a bid is made in a first-class market with temporarily determined bid contents; and
   an indicator calculation part (11) that calculates an indicator indicating a degree of risk and return based on the profit calculated and the similar instance data.

2. The information processing apparatus according to claim 1, further comprising
   a first determination part (16) that searches for bid contents that maximize or minimize the indicator and determines bid contents for the first-class market based on the bid contents searched for.

3. The information processing apparatus according to claim 1 or 2, wherein
   the indicator calculation part (11) calculates the indicator based on a pseudo-probability distribution of a profit associated with the similar instance data.

4. The information processing apparatus according to any of claims 1-3, wherein
   the indicator calculation part (11) calculates a first indicator as the indicator based on a weighted average value of a profit associated with the similar instance data.

5. The information processing apparatus according to any of claims 1-4, wherein
   the indicator calculation part (11) adds, in ascending order of a profit associated with the similar instance data, similarities of a plurality of pieces of the similar instance data and calculates a second indicator as the indicator based on a profit associated with similar instance data when a sum of the similarities is equal or closest to a first reference value.

6. The information processing apparatus according to any of claims 1-5, wherein
the indicator calculation part (11) adds, in ascending order of profit associated with the similar instance data, similarities of a plurality of pieces of the similar instance data and calculates a third indicator as the indicator based on a profit associated with similar instance data when a sum of the similarities is equal or closest to a second reference value.

7. The information processing apparatus according to any of claims 1-6, wherein
the indicator calculation part (11) adds, in descending order of a profit associated with the similar instance data, similarities of a plurality of pieces of the similar instance data and calculates a fourth indicator as the indicator based on a profit associated with similar instance data when a sum of the similarities is equal or closest to a third reference value.

8. The information processing apparatus according to any of claims 1-7, wherein
the indicator calculation part (11) adds, in descending order of a profit associated with the similar instance data, similarities of a plurality of pieces of the similar instance data and calculates a fifth indicator as the indicator based on a profit associated with similar instance data when a sum of the similarities is equal or closest to a fourth reference value.

9. The information processing apparatus according to any of claims 1-8, further comprising
a second determination part (9) that calculates, with a plurality of the indicators provided, a transition of a result value of a transaction price based on past transaction result data and determines the indicators based on the transition.

10. The information processing apparatus according to claim 9, wherein
the second determination part (9) determines the indicator for use in determination of a transaction volume based on whether the transition of the result value is on a downtrend, on an uptrend, or leveling off.

11. The information processing apparatus according to claim 9, further comprising:
an output part (18) that displays the transition of the result value; and
an acquisition part (3) that acquires information indicating at least one of the indicators from an input device of a user, wherein
the second determination part (9) determines the indicator for use in determination of a transaction volume based on the information acquired.

12. The information processing apparatus according to claim 11, further comprising
a third determination part (9) that determines, with a plurality of trading market provided, the transaction volume in the plurality of trading markets for each of the indicators, wherein
the output part (18) outputs information representing whether the transaction volumes in the plurality of trading markets are identical between the indicators.

13. The information processing apparatus according to any of claims 1-11, further comprising
a third determination part (9) that determines whether a bid is made for each time zone in a second-class market different from the first-class market, the bid being made for a remaining transaction volume after a bid is made in the first-class market, wherein
the profit calculation part (8) calculates a profit on an assumption that a bid is made in the first-class market and the second-class market with the temporarily determined bid contents.

14. The information processing apparatus according to claim 13, wherein
the third determination part (9) determines whether a bid is made by comparing a prediction value of a market price for each time zone with a transaction cost in the second-class market.

15. The information processing apparatus according to any of claims 1-14, wherein
the similar instance data extraction part (13) extracts a plurality of pieces of similar instance data for a plurality of bid unit periods from latest transaction result data.

**16.** The information processing apparatus according to any of claims 1-15, further comprising
a similarity calculation part (14) that calculates a similarity score between a bid unit period of the first-class market and the past transaction result data, wherein
the similar instance data extraction part (13) extracts the similar instance data based on the similarity score.

**17.** The information processing apparatus according to claim 16, further comprising:

an instance data storage (12) that stores, as instance data, calendar information, meteorological result data, and price result data of a plurality of trading markets, the calendar information, the meteorological result data, and the price result data being associated with each other, wherein
the similarity calculation part (14) calculates the similarity score between the meteorological result data contained in the instance data stored in the instance data storage and a meteorological forecast data in a bid unit time frame, and
the similar instance data extraction part (13) extracts, from past instance data, a fixed number of pieces of instance data having the similarity scores equal to or greater than a certain threshold or in descending order of the similarity score.

**18.** The information processing apparatus according to any of claims 1-17, wherein
the first-class market is a trading market where a grid operator procures electricity for regulation of supply and demand from a trading market and manages the electricity, and even after a bid is settled, whether to request generation of electricity is not determined until immediately before.

**19.** An information processing method comprising:

extracting similar instance data from past transaction result data;
calculating a profit on an assumption that a bid is made in a first-class market with temporarily determined bid contents; and
calculating an indicator indicating a degree of risk and return based on the profit calculated and the similar instance data.

**20.** A program for causing a computer to execute:

extracting similar instance data from past transaction result data;
calculating a profit on an assumption that a bid is made in a first-class market with temporarily determined bid contents; and
calculating an indicator indicating a degree of risk and return based on the profit calculated and the similar instance data.

FIG. 1

EP 3 882 844 A1

①BID
(POWER [W], UNIT PRICE OF POWER [¥/W], UNIT PRICE OF ENERGY [¥/Wh])

②CONTRACT

TARGET DATE

③PROCUREMENT REQUEST FROM GRID
  OPERATOR
                                           } REPEAT FOR EACH TIME ZONE
④DETERMINE ACTIVATION (SALE OF
  ELECTRICITY) VOLUME BASED ON
  MERIT ORDER

TOTAL
ACTIVATION
VOLUME

BID UNIT PRICE
[€/MWh]

C  B  A  D

ENERGY[MWh]

TOTAL
ACTIVATION
VOLUME

C  B  A  D

ENERGY[MWh]

FIG. 2

FIG. 3

| TRANSACTION DATE | DAY OF THE WEEK | BID UNIT TIME FRAME | SECOND-CLASS MARKET PRICE | FIRST-CLASS MARKET PRICE (AVERAGE) | FIRST-CLASS MARKET ACTIVATION VOLUME |
|---|---|---|---|---|---|
| 2018/4/1 | SUNDAY | 1 | 7.58 | 7.62 | 0 |
| 2018/4/1 | SUNDAY | 2 | 7.32 | 7.52 | 0 |
| 2018/4/1 | SUNDAY | 3 | 6.9 | 7.5 | 0 |
| 2018/4/1 | SUNDAY | 4 | 6.84 | 7.56 | 0 |
| 2018/4/1 | SUNDAY | 5 | 6.92 | 6.89 | 0 |
| 2018/4/1 | SUNDAY | 6 | 7.55 | 7.83 | 0 |
| 2018/4/1 | SUNDAY | 7 | 7.51 | 7.77 | 10 |
| 2018/4/1 | SUNDAY | 8 | 7.32 | 7.63 | 20 |
| 2018/4/1 | SUNDAY | 9 | 7.03 | 7.08 | 30 |
| ⋮ | ⋮ | ⋮ | ⋮ | ⋮ | ⋮ |
| 2018/9/8 | MONDAY | 38 | 12.12 | 9.09 | 100 |
| 2018/9/8 | MONDAY | 39 | 12.12 | 9.31 | 50 |
| 2018/9/8 | MONDAY | 40 | 11.51 | 8.06 | 60 |
| 2018/9/8 | MONDAY | 41 | 11.31 | 7.46 | 0 |
| 2018/9/8 | MONDAY | 42 | 11.44 | 7.4 | 0 |
| 2018/9/8 | MONDAY | 43 | 10.89 | 7.15 | 0 |
| 2018/9/8 | MONDAY | 44 | 10.74 | 6.77 | 0 |
| 2018/9/8 | MONDAY | 45 | 10.86 | 7.28 | 0 |
| 2018/9/8 | MONDAY | 46 | 10.75 | 6.87 | 0 |
| 2018/9/8 | MONDAY | 47 | 10.35 | 7.09 | 0 |
| 2018/9/8 | MONDAY | 48 | 10.09 | 6.93 | 0 |

## FIG. 4

| TRANSACTION DATE | DAY OF THE WEEK | SIMILARITY SCORE |
|---|---|---|
| 2018/4/10 | FRIDAY | 0.1 |
| 2018/4/9 | SATURDAY | 0.1 |
| 2018/4/8 | SUNDAY | 0.1 |
| 2018/4/7 | MONDAY | 0.1 |
| 2018/4/6 | TUESDAY | 0.1 |
| 2018/4/5 | WEDNESDAY | 0.1 |
| 2018/4/4 | THURSDAY | 0.1 |
| 2018/4/3 | FRIDAY | 0.1 |
| 2018/4/2 | SATURDAY | 0.1 |
| 2018/4/1 | SUNDAY | 0.1 |

# FIG. 5

| TRANSACTION DATE | DAY OF THE WEEK | SIMILARITY SCORE |
|---|---|---|
| 2018/4/10 | TUESDAY | 0.169 |
| 2018/4/9 | MONDAY | 0.155 |
| 2018/4/7 | SATURDAY | 0.141 |
| 2018/4/6 | FRIDAY | 0.127 |
| 2018/4/5 | THURSDAY | 0.113 |
| 2018/4/4 | WEDNESDAY | 0.099 |
| 2018/4/3 | TUESDAY | 0.085 |
| 2018/4/2 | MONDAY | 0.070 |
| 2018/4/8 | SUNDAY | 0.028 |
| 2018/4/1 | SUNDAY | 0.014 |

# FIG. 6

FIG. 7

FIG. 8

SIMILARITY
SCORE

PROFIT
(MILLION YEN)

FIG. 9

RISK/RETURN INDICATOR

G4

G1

G2

100    TEMPORARY    200
BID PRICE

NO TRADE-OFF OCCURS

# FIG.10A

RISK/RETURN INDICATOR

G24

G21

G22

100    TEMPORARY    100
BID PRICE

TRADE-OFF OCCURS

# FIG.10B

START

DESIGNATE DATE AND TIME, MARKET, AND AREA WHERE TRANSACTION IS MADE — S1

DESIGNATE OR AUTOMATICALLY SELECT TRADING STRATEGY
FOR TARGET AREA AND TARGET DATE AND TIME — S2

EXTRACT A PLURALITY OF TRANSACTION INSTANCE DATA
SETS OF EACH SIMILAR DATE HAVING SIMILARITY
SCORES EQUAL TO OR GREATER THAN A CERTAIN THRESHOLD
OR IN DESCENDING ORDER OF SIMILARITY SCORE — S3

LOOP 1: TEMPORARILY SET TEMPORARY BID POWER AND
TEMPORARY BID PRICE WITH WHICH BID IS MADE IN FIRST-CLASS MARKET — S4

LOOP 2: EXTRACT SIMILAR DATE SAMPLE TO BE CALCULATED — S5

CALCULATE, FROM DATA SET OF TARGET SIMILAR DATE, ESTIMATED ACTIVATION
VOLUME PER DAY ON THE ASSUMPTION THAT BID IS MADE FOR ELECTRICITY
IN FIRST-CLASS MARKET UNDER TEMPORARILY SET CONDITION
AND CALCULATE PROFIT IN FIRST-CLASS MARKET — S6

IS CALCULATION FOR ALL SIMILAR SAMPLES COMPLETED? — S7
N / Y

CALCULATE PSEUDO-OCCURRENCE PROBABILITY DISTRIBUTION
OF TOTAL PROFIT AND CALCULATE RISK/RETURN INDICATOR — S8

IS IT OPTIMUM RISK/RETURN INDICATOR? — S9
N / Y

STORE OPTIMUM BID CONTENTS AT PRESENT — S10

IS SEARCH TERMINATION CONDITION SATISFIED? — S11
N / Y

OUTPUT TEMPORARY BID POWER AND THE TEMPORARY BID PRICE,
THE PSEUDO-PROBABILITY DISTRIBUTION, THE RISK/RETURN INDICATOR,
THE TRADE-OFF INFORMATION — S12

END

# FIG.11

FIG.12

FIG.13

EP 3 882 844 A1

| POINT ID | DATE | TIME | TEMPERATURE [°C] | SOLAR RADIATION INTENSITY [MJ/m²] | WIND SPEED [m/s] | PRECIPITATION [mm] |
|---|---|---|---|---|---|---|
| ... | ... | ... | ... | ... | ... | ... |
| 001 | 2018/10/01 | 0:00 | 11.2 | 0.0 | 3.4 | 0.0 |
| 001 | 2018/10/01 | 0:30 | 10.9 | 0.0 | 3.5 | 0.5 |
| 001 | 2018/10/01 | 1:00 | 10.3 | 0.0 | 2.9 | 1.5 |
| 001 | 2018/10/01 | 1:30 | 10.1 | 0.0 | 3.9 | 2.0 |
| 001 | 2018/10/01 | 2:00 | 10.0 | 0.0 | 3.9 | 1.2 |
| 001 | 2018/10/01 | 2:30 | 10.0 | 0.0 | 4.9 | 1.0 |
| 001 | 2018/10/01 | 3:00 | 9.9 | 0.0 | 4.1 | 2.5 |
| 001 | 2018/10/01 | 3:30 | 10.3 | 0.0 | 4.8 | 1.5 |
| 001 | 2018/10/01 | 4:00 | 10.5 | 0.0 | 5.4 | 3.5 |
| 001 | 2018/10/01 | 4:30 | 11.1 | 0.0 | 5.8 | 2.0 |
| 001 | 2018/10/01 | 5:00 | 11.5 | 0.0 | 4.6 | 2.0 |
| 001 | 2018/10/01 | 5:30 | 11.7 | 0.0 | 6.0 | 1.0 |
| ... | ... | ... | ... | ... | ... | ... |

# FIG.14

600

607

604

COMMUNICATION
DEVICE

601

CPU

602

INPUT
INTERFACE

605

PRIMARY
STORAGE
DEVICE

603

DISPLAY
DEVICE

606

SECONDARY
STORAGE
DEVICE

# FIG.15

Europäisches
Patentamt

European
Patent Office

Office européen
des brevets

# EUROPEAN SEARCH REPORT

**Application Number**

EP 20 19 5022

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/101123 A1 (ALVARADO FERNANDO L [US] ET AL) 29 May 2003 (2003-05-29)<br>* abstract *<br>* paragraph [0002] - paragraph [0021] *<br>* paragraph [0038] - paragraph [0310] *<br>* claims 1-33 *<br>* figures 1-4,6-11 * | 1-20 | INV.<br>G06Q40/06 |
| X | US 2019/130423 A1 (WATANABE TOHRU [JP] ET AL) 2 May 2019 (2019-05-02)<br>* abstract *<br>* paragraph [0002] - paragraph [0031] *<br>* paragraph [0084] - paragraph [0249] *<br>* claims 1-12; figures 1-5,16-19 * | 1-20 | |
| X | JP 4 660281 B2 (TOSHIBA CORP) 30 March 2011 (2011-03-30)<br>* abstract *<br>* paragraph [0002] - paragraph [0066] *<br>* claims 1-5 * | 1-20 | |
| X | EP 2 940 646 A1 (TOSHIBA KK [JP]) 4 November 2015 (2015-11-04)<br>* abstract *<br>* paragraph [0001] - paragraph [0010] *<br>* paragraph [0013] - paragraph [0130] *<br>* claims 1-9; figures 1-14 * | 1-20 | TECHNICAL FIELDS SEARCHED (IPC)<br><br>G06Q |

The present search report has been drawn up for all claims

| Place of search | Date of completion of the search | Examiner |
|---|---|---|
| The Hague | 11 November 2020 | Bassanini, Anna |

## ANNEX TO THE EUROPEAN SEARCH REPORT
## ON EUROPEAN PATENT APPLICATION NO.

EP 20 19 5022

11-11-2020

| Patent document cited in search report | | Publication date | Patent family member(s) | | | Publication date |
|---|---|---|---|---|---|---|
| US 2003101123 | A1 | 29-05-2003 | NONE | | | |
| US 2019130423 | A1 | 02-05-2019 | JP | 2019082935 | A | 30-05-2019 |
| | | | US | 2019130423 | A1 | 02-05-2019 |
| JP 4660281 | B2 | 30-03-2011 | JP | 4660281 | B2 | 30-03-2011 |
| | | | JP | 2006331229 | A | 07-12-2006 |
| EP 2940646 | A1 | 04-11-2015 | CN | 104011758 | A | 27-08-2014 |
| | | | EP | 2940646 | A1 | 04-11-2015 |
| | | | JP | 5875971 | B2 | 02-03-2016 |
| | | | JP | 2014127107 | A | 07-07-2014 |
| | | | WO | 2014103766 | A1 | 03-07-2014 |

EPO FORM P0459